# EUROPEAN PATENT APPLICATION

(11) **EP 2 991 217 A1**
(43) Date of publication of application: **02.03.2016**
(21) Application number: 13882681.3
(22) Date of filing: 26.04.2013
(51) Int. Cl.: H02M 7/48

(54) **POWER CONVERSION DEVICE**

(71) Applicant: Hitachi Industrial Equipment Systems Co., Ltd., Chiyoda-ku Tokyo 101-0022 (JP)
(72) Inventor: IBORI, Satoshi, Chiyoda-ku, Tokyo 101-022 (JP); TOMITA, Hiroyuki, Chiyoda-ku, Tokyo 101-022 (JP); NAKAMURA, Atsuhiko, Chiyoda-ku, Tokyo 101-022 (JP)
(74) Representative: Strehl Schübel-Hopf & Partner
(86) International application number: PCT/JP2013/062315
(87) International publication number: WO 2014/174651

(57) **Abstract**

This power conversion device is provided with: a converter that rectifies AC voltage of an AC power source, converting the AC voltage to DC voltage; a DC intermediate circuit having a smoothing capacitor that smooths the DC voltage converted by the converter; an inverter that converts the DC voltage converted by the converter to AC voltage, and that is provided with a semiconductor chip that forms a temperature detection diode at the power semiconductor device; and an operation unit that can set a plurality of setting temperatures.

## Description

### TECHNICAL FIELD

The present invention relates to a power conversion device.

### BACKGROUND ART

A power semiconductor in a power conversion device includes a cooling fin and a cooling fan as a structure to cool heat generation due to an occurring loss. The power semiconductor typically conducts heat from the power semiconductor as a heating element to the cooling fin, sends air to the cooling fin with the cooling fan to perform heat exchange, and performs heat radiation by a cooling air system.

While the power conversion device performs variable control of a voltage and a frequency by switching-driving a power semiconductor element such as an IGBT, a semiconductor module in which peripheral circuits such as a protection circuit for downsizing are incorporated in the same package, a so-called intelligent power module (IPM), is often used.

Typically, an operating limit temperature is set for the power semiconductor element, and if the power semiconductor element is used with heat generation even after the temperature exceeds the operating limit temperature of the power semiconductor, the power semiconductor element may be broken.

Therefore, a semiconductor module in which a detection element that detects the temperature of the power semiconductor element is incorporated in the same package is typically employed so that the power semiconductor element is used at and under the operating limit temperature, and can be fully utilized with high reliability.

As the temperature detection element in this case, it is typical to use a thermistor having a characteristic of change of a resistance value according to the temperature or a diode having a characteristic of change of a forward drop voltage according to the temperature.

However, to accurately measure the temperature of the power semiconductor element, it is necessary to use the diode having a characteristic of change of a forward drop voltage according to the temperature.

For example, PATENT LITERATURE 1 discloses "including a first semiconductor element having a temperature detection means, and a second semiconductor element having a current detection means for detecting a current flowing in the second semiconductor element and connected in parallel to the first semiconductor element, wherein a semiconductor power conversion circuit in which the first and second semiconductor elements are arranged on the same heat radiation plate in a zigzag manner, an overheat protection circuit that performs overheat protection of the first and second semiconductor elements based on temperature information obtained from the temperature detection means of the first semiconductor element, an overcurrent protection circuit that performs overcurrent protection of the first and second semiconductor elements based on current information obtained from the current detection means of the second semiconductor element, a current sensor that detects an output current of the semiconductor power conversion circuit, and a means that suppresses the output current of the semiconductor power conversion circuit when a detection value of the current sensor at the time of operation of the overcurrent protection circuit or the overheat protection circuit is a setting value determined in advance or less" (CLAIM 1 of CLAIMS). Further, PATENT LITERATURE 2 discloses "a temperature measuring circuit that detects a temperature of a power semiconductor element provided with a power semiconductor element and a temperature detection diode on a silicon chip, wherein the temperature measuring circuit detects a forward current that has flown between an anode and a cathode in a state where potentials of the anode and the cathode of the temperature detection diode are kept to be a more negative potential than a potential of an emitter or a source of the power semiconductor element when the power device is an n channel type device." (CLAIM 1 of CLAIMS).

### CITATION LIST

### PATENT LITERATURES

PATENT LITERATURE 1: Japanese Patent No. 24177392
PATENT LITERATURE 2: JP-A-2010-199490

### SUMMARY OF INVENTION

### TECHNICAL PROBLEM

Paragraph [0012] of PATENT LITERATURE 1 discloses that an overheat protection circuit 5 is configured from a constant current source 5a for generating a forward voltage in a temperature detection diode 3, an comparison circuit for overheat determination 5b that compares the forward voltage of the temperature detection diode 3 and a reference voltage value determined in advance, a logical inversion circuit 5c that turns an IGBT1 and IGBT2 OFF when the IGBT1 is determined to be in an overheating state, and a buffer 5d for communicating the overheating state to a higher CPU 7.

That is, PATENT LITERATURE 1 has a configuration to determine that the IGBT1 is in the overheating state and to turn the IGBT1 and the IGBT2 OFF automatically when the forward voltage of the temperature detection diode 3 has reached the reference voltage value determined in advance, and discloses an objective to protect the power semiconductor element IGBT from a temperature that should not be exceeded, that is, a temperature corresponding to one reference voltage value determined in advance.

Further, paragraph [0016] discloses that overheat breakage or overcurrent breakage of the IGBT can be prevented by including the overheat protection circuit 5 and an overcurrent protection circuit 6.

However, the temperature that should not be exceeded by the power semiconductor element IGBT, that is, the one reference voltage value determined in advance cannot be arbitrarily set and changed by a user who uses the power semiconductor element, and is a mere temperature determined in advance by the manufacturer side of the power semiconductor element and is merely provided in order to use the power semiconductor element in the operating limit temperature or less.

Further, paragraph [0041] of PATENT LITERATURE 2 discloses that, when a temperature of a power semiconductor device provided with a power semiconductor element and a temperature detection diode on a silicon chip is detected, a forward current that has flown between an anode and a cathode is detected in a state where potentials of the anode and the cathode of the temperature detection diode are kept to be a more negative potential than a terminal potential of a lower potential side of a plurality of terminals included in the power semiconductor element, and therefore, separation of the power semiconductor element and the temperature detection diode is configured from a low cost configuration by junction separation, instead of a high cost configuration through an insulating film, and the temperature of the silicon chip is highly precisely detected.

Paragraph [0052] discloses that whether a calculated silicon chip temperature Tc exceeds a first predetermined temperature T1, and when Tc ≤ T1, it is determined to be in a normal state and timer interruption processing is terminated. When Tc < T1, the processing is moved onto step S4, and whether the calculated silicon chip temperature Tc exceeds a second predetermined temperature T2. When Tc ≤ T2, the processing is moved onto step S5. At step S5, a protection signal Sp1 that limits a switching frequency of a gate signal supplied to a gate of the current IGBT5 or IGBT6 to 1/2 is output to a gate driver IC7 or IC8, and then the timer interruption processing is terminated and the processing is returned to a predetermined main program. When Tc > T2 at step S4, the processing is moved onto step S6, and a protection signal Sp2 that stops the gate signal supplied to the IGBT5 or IGBT6 is output to the gate driver IC7 or IC8, and then the timer interruption processing is terminated and the processing is returned to the predetermined main program.

However, the first predetermined temperature T1 and the second predetermined temperature T2 cannot be set and changed by the user, and are mere temperatures determined in advance by the manufacturer side of the power module in which the power semiconductor is mounted, and cannot be arbitrarily set and changed by the user who uses the power semiconductor element, which is similar to PATENT LITERATURE 1.

### SOLUTION TO PROBLEM

To achieve the above object, the present invention provides a power conversion device includes: a converter configured to rectify and convert an alternating current voltage of an alternating current power source into a direct current voltage; a direct current intermediate circuit including a smoothing capacitor configured to smooth the direct current voltage converted in the converter; an inverter configured to convert the direct current voltage converted in the converter into an alternating current voltage, and including a semiconductor chip in which a temperature detection diode is formed in a power semiconductor element; and an operation unit configured to be able to set a plurality of setting temperatures.

### ADVANTAGEOUS EFFECTS OF INVENTION

According to the present invention, a power conversion device that can improve convenience of a user can be provided.

### BRIEF DESCRIPTION OF DRAWINGS

[FIG 1] FIG 1 shows a configuration diagram of a power conversion device according to the present embodiment.
[FIG 2] FIG 2 shows a layout diagram of the power conversion device according to the present invention.
[FIG 3] FIG 3 is an example of one arm configuration diagram inside an inverter of the power conversion device according to the present invention.
[FIG. 4] FIG 4 shows another example of one arm configuration diagram inside the inverter.
[FIG 5] FIG 5 shows an example of a detailed arm configuration diagram inside the inverter.
[FIG 6] FIG 6 shows an example of an arm configuration diagram of a composite module.
[FIG 7] FIG 7 shows an example of an arm configuration diagram of a converter unit and an inverter unit.
[FIG 8] FIG 8 shows a characteristic diagram illustrating correlation between a forward drop voltage of a temperature detection diode and a temperature.
[FIG 9] FIG 9 shows an example of a forward drop voltage of a temperature detection diode stored in non-volatile memory in advance and temperature data corresponding to the voltage.
[FIG 10] FIG 10 shows an example of setting of a first temperature setting value, a second temperature setting value, and a diode forward drop voltage value.
[FIG 11] FIG 11 shows lists of temperature setting functions displayed on a digital operation panel according to the present invention.
[FIG 12] FIG 12 shows a diagram of the power conversion device according to the present invention stored in a self-support board.
[FIG 13] FIG 13 shows examples of configuration diagrams of a temperature detection diode formed on a chip of the power semiconductor element.

### DESCRIPTION OF EMBODIMENTS

### [First Embodiment]

Hereinafter, the present invention will be described using the drawings. A configuration common among the drawings is denoted with the same reference number. Further, the present invention is not limited to those shown examples.

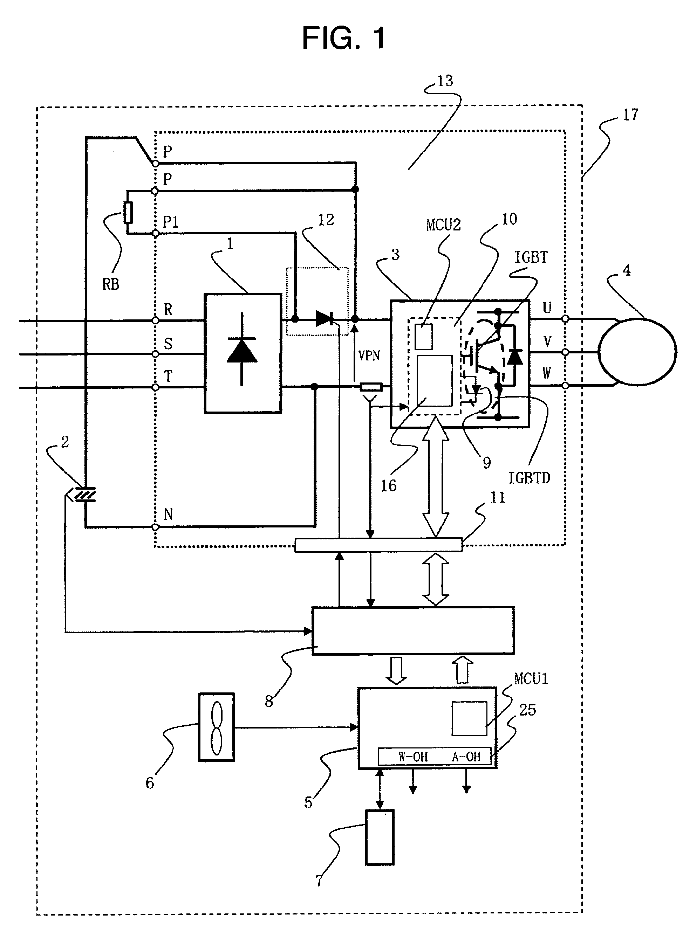

FIG. 1 shows a configuration diagram of a power conversion device 17 according to the present invention.

The power conversion device 17 of FIG 1 controls a frequency and a voltage to be output to an alternating current motor 4, and is configured from a converter 1, a smoothing capacitor 2, an inverter 3, a control circuit 5, a cooling fan 6, a digital operation panel 7, a power source circuit 8, a temperature detection diode 9, a drive circuit 10, a connector 11, a power semiconductor module 13, and a current suppression resistance RB.

The converter 1 converts alternating current power into direct current power.

The inverter 3 converts direct current power into alternating current power having an arbitrary frequency.

The semiconductor module 13 includes the converter 1, a rush suppression circuit 12, the inverter 3, and the like.

The cooling fan 6 cools the power semiconductor module 13. The current suppression resistance RB is connected with the rush suppression circuit 12 in parallel.

The digital operation panel 7 sets and changes various types of control data to the power conversion device 17, and performs abnormality display. The digital operation panel 7 is provided with a display unit that can perform abnormality display. When abnormality is detected in the power conversion device, the abnormality is displayed in the display unit.

The type of the operation panel 7 of the present embodiment is not especially limited. However, the operation panel 7 is configured such that a user can perform operation while viewing display of the display unit in consideration of operability of the user of the device as a digital operation panel.

Note that the display unit is not necessarily integrally configured with the operation panel 7. However, an integral configuration is desirable so that an operator of the digital operation panel 7 can perform an operation while viewing the display.

The various types of control data of the power conversion device input from the operation panel 7 are stored in a storage unit (not shown).

A microcomputer (control computing device) is mounted on the control circuit 5, and a microcomputer MCU1 is configured to perform calculation based on information from storage data in the storage unit in which the various types of control data are stored, and to perform control processing necessary for the entire device according to the various types of control data input from the digital operation panel 7. Note that the digital operation panel 7 is configured to display, when abnormality occurs, the abnormality or warning.

A switching regulator circuit (DC/DC converter) is mounted in the power source circuit 8. The power source circuit 8 generates direct current voltages necessary for operation of the power conversion device, and supplies the direct current voltages to respective configurations.

The drive circuit 10 drives the inverter. A driving circuit 16 that drives a main switching element and a microcomputer MCU2 are incorporated in the drive circuit 10. The microcomputer MCU2 transmits/receives (the MCU1 and MCU2 perform communication) a signal for driving a switching element of the inverter 3 and the like to/from the driver circuit 16 based on a command from the control circuit 5. Here, in FIG 1, the microcomputer MCU2 is built in the inverter 3. However, the MCU2 may be arranged outside the inverter 3.

The connector 11 is a connector provided on a module case of the power semiconductor module 13 and connected with the power source circuit 8, and transfers various input/output signal with the control circuit 5.

The temperature detection diode 9 is formed on a switching element that is one type of a power semiconductor element, for example, on an IGBT chip.

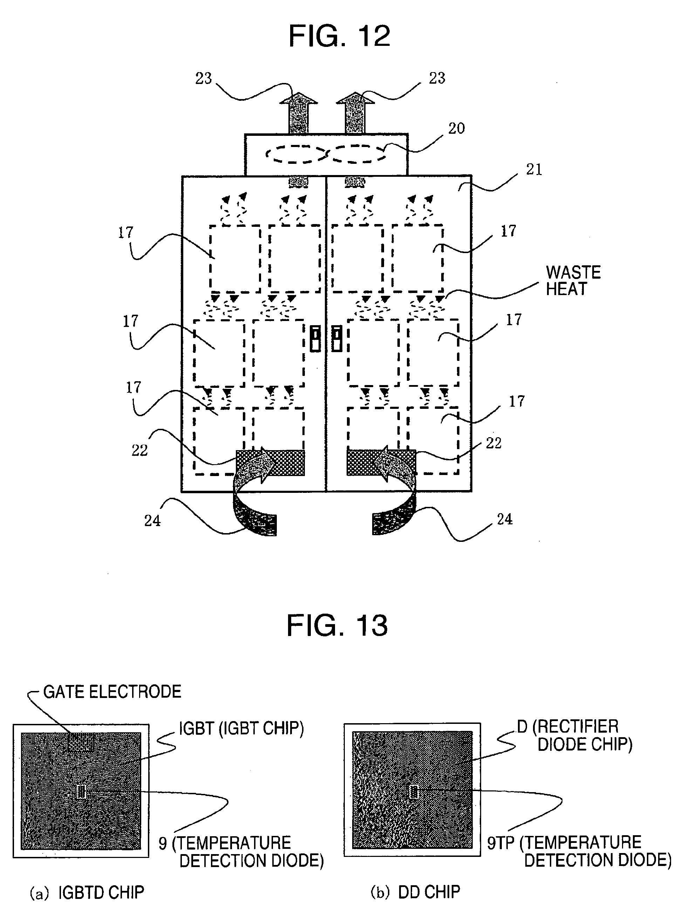

For example, as shown in FIG 13(a), a configuration in which the temperature detection diode 9 of a pn junction is formed on a silicon IGBT chip that is a power semiconductor element may be employed.

The configuration in which the temperature detection diode 9 is formed on the IGBT chip is an IBGTD chip (semiconductor chip). Of course, the configuration is not limited to the silicon chip (Si). For example, a silicon carbide chip (SiC) or a gallium nitride chip (GaN) can be similarly employed.

A constant current is supplied from the driving circuit 16 to the temperature detection diode 9, and a temperature of the power semiconductor element chip is detected using a characteristic of change of a forward drop voltage due to change of the temperature.

The embodiment is configured to detect a both-end voltage of the diode in the driving circuit 16 using the temperature characteristic.

For example, it is configured to individually set a first temperature setting value and a second temperature setting value that are detection temperatures of the power semiconductor element chip, from the digital operation panel 7.

These setting values are transmitted from the MCU1 in the control circuit 5 to the MCU2 in the drive circuit 10.

An output signal W-OH is an output signal that indicates the temperature has reached a prior notice of warning temperature, and an output signal A-OH is an output signal that indicates the temperature has reached a warning temperature.

For example, it is configured such that only warning is output and an output of the power conversion device is not cut off when the detection temperature has reached the first temperature setting value and the prior notice of warning temperature signal W-OH is output, and the output of the power conversion device is cut off when the detection temperature has reached the second temperature setting value and the warning temperature signal A-OH is output.

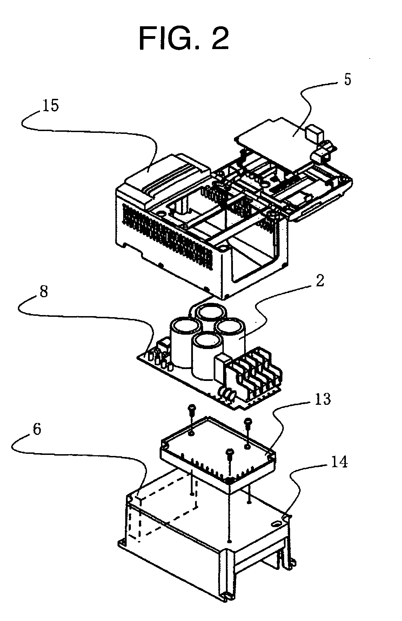

FIG 2 shows a layout diagram of a power conversion device according to the present invention.

The power conversion device shown in FIG 2 is a composite module (IPM) having the converter 1, the inverter 3, and the drive circuit 10 mounted in one module. The power conversion device includes a cooling fin 14 and the cooling fan 6 that cool the power semiconductor module 13 configured as the composite module (IPM), and has a structure to conduct heat from the power semiconductor 13, which is a heating element, to the cooling fin 14, and to send air to the cooling fin by the cooling fan 6 to perform heat exchange to perform heat radiation.

FIG 2 shows a power source substrate 8 and a resin mold case 15.

A temperature detection diode is mounted in the power semiconductor 13 configured as a composite module, and detects the temperature of the power semiconductor element. A constant current is supplied to the temperature detection diode, and a both-end voltage of the diode is detected using the characteristic of change of a forward drop voltage according to the temperature.

When the constant current flows in the diode, the forward drop voltage exhibits a linear characteristic proportional to the temperature.

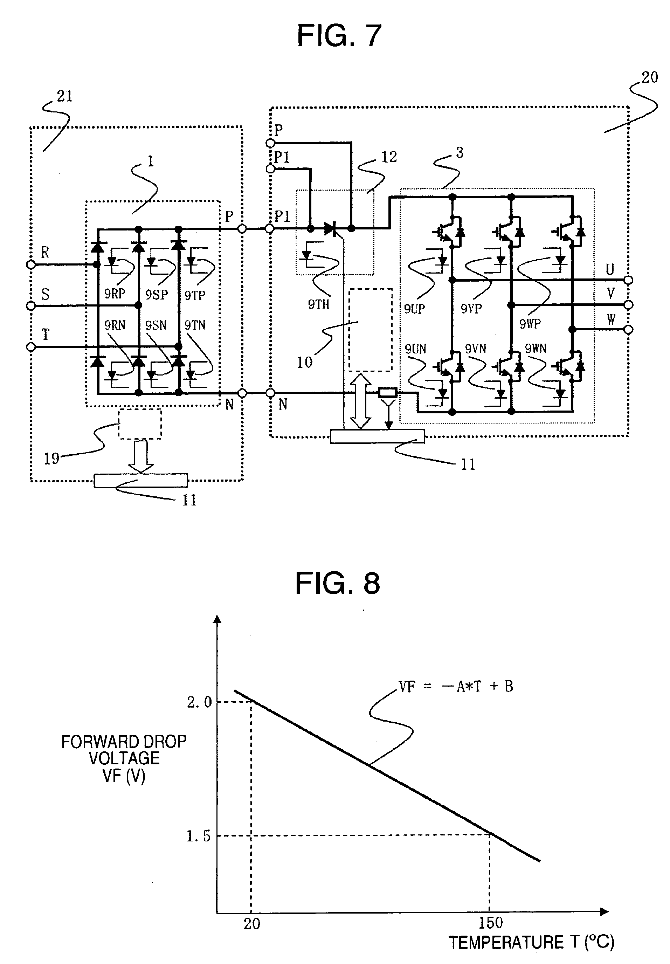

FIG 8 shows a characteristic diagram illustrating correlation between a forward drop voltage VF of the temperature detection diode and a temperature T.

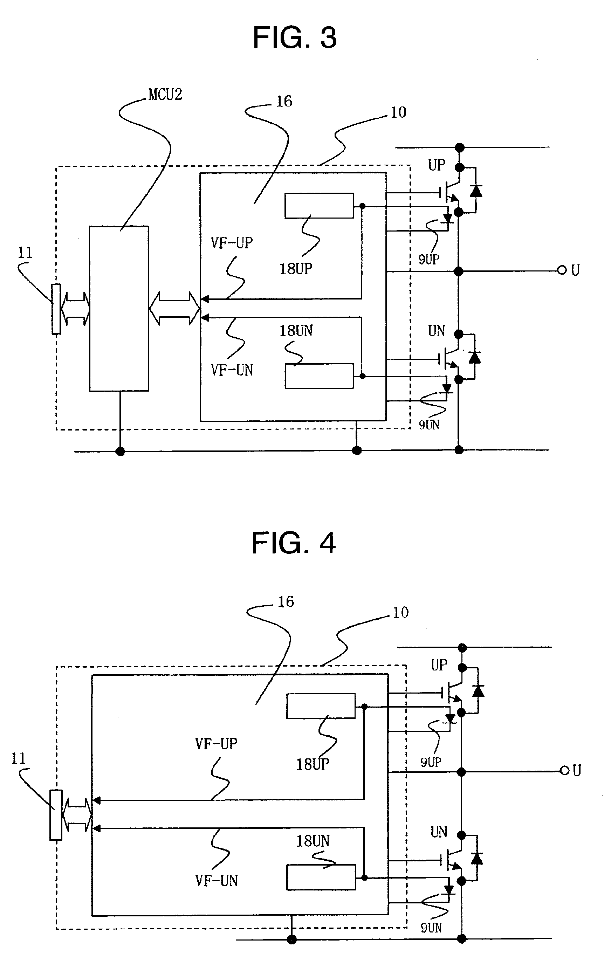

FIG 3 shows an example of one arm configuration diagram inside an inverter of a power conversion device according to the present invention.

Regarding main elements corresponding to respective arms of three-phase output terminals: a U-phase, a V-phase, and a W-phase, the U-phase is configured from UP that is an upper arm, and UN that is a lower arm

Further, the temperature detection diode of an upper arm power semiconductor element chip provided on a U-phase power semiconductor element UP chip is 9UP, and the temperature detection diode on a lower arm power semiconductor element UN chip is 9UN

The constant current is supplied to these diodes from respective constant current circuits 18UP and 18UN of the driving circuit 16, and change of the forward drop voltages due to change of the temperature are detected. Then, it is configured to send detection voltage values VF-UP and VF-UN that are respective both-end voltages of the diodes detected in the driving circuit 16 to an A/D converter of the microcomputer MCU2, and to calculate temperatures of the power semiconductor element chips corresponding to the detection voltage values in the microcomputer MCU2.

The present invention has one characteristic in that the temperature of the power semiconductor element chip is detected using the characteristic of change of the forward drop voltage. The embodiment is configured to detect the respective both-end voltages VF-UP and VF-UN of the diodes in the driving circuit 16 using the temperature characteristic.

The embodiment is configured to send the respective detection voltage values VF-UP and VF-UN of the diodes to the A/D converter of the microcomputer MCU2, and to calculate the temperatures of the power semiconductor element chips corresponding to the detection voltage values in the microcomputer MCU2.

The temperatures of the power semiconductor element chips corresponding to the detection values of the both-end voltages are calculated from the detection values of the both-end voltages of the diodes using a characteristic equation VF = -A*T + B that indicates correlation between the forward drop voltage of the temperature detection diode and the temperature shown in FIG 8.

A configuration to store correlation data between the forward drop voltage of the temperature detection diode and the temperature of the power semiconductor element chip obtained by calculation in advance, in non-volatile memory, and to read out the temperature from the non-volatile memory does not impair the concept of the present invention.

The configuration to store the correlation data between the forward drop voltage of the temperature detection diode and the temperature of the power semiconductor element chip in the non-volatile memory in advance, and to read the temperature corresponding to the detection voltage value from the non-volatile memory for each detection value of the both-end voltage is more realistic system, rather than the configuration to cause the microcomputer MCU2 to calculate the temperature according to the characteristic equation VF = -A*T + B, for each detection value of the both-end voltage every time, even in terms of a load factor of the microcomputer.

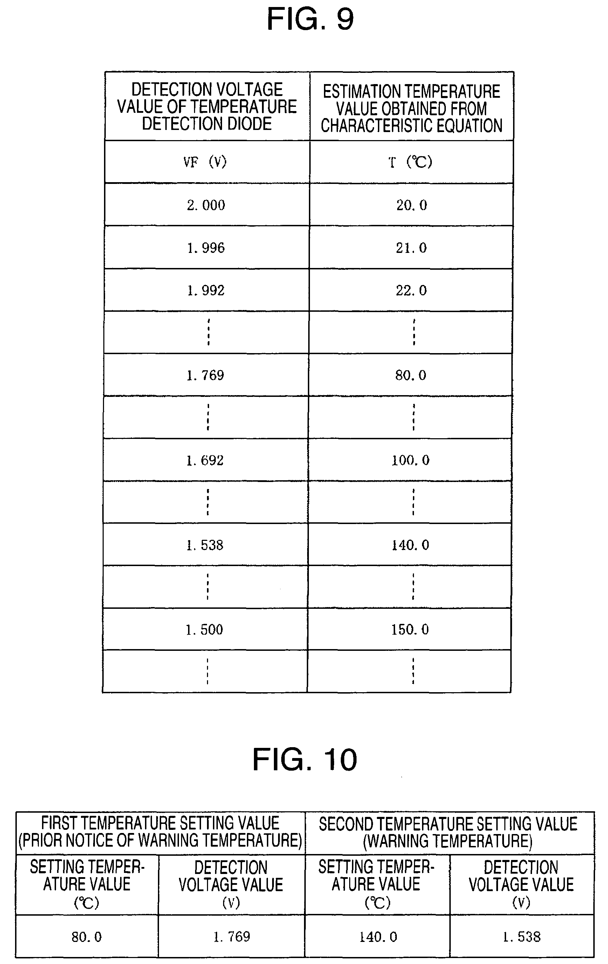

FIG 9 shows an example of content of non-volatile memory related to the correlation data between the forward drop voltage of the temperature detection diode and the temperature of the power semiconductor element chip.

Actually, the content of the memory is stored in binary number, but the content is written in decimal number to make the content more easily understood, and this does not impair the concept of the present invention.

Further, in the above-described embodiment, an example of calculating the temperature of the power semiconductor element in the microcomputer MCU2 has been described. However, the temperature may be calculated in the microcomputer MCU1 of the control circuit 5 instead of the microcomputer MCU2.

Further, the described numerical values are examples, and an embodiment is not limited to those numerical values.

FIG. 10 is an example of the first temperature setting value and the second temperature setting value of the power semiconductor element chip set by the user from the digital operation panel 7, and the forward drop voltage values of the temperature detection diode on the power semiconductor element chip.

It can be seen that, when the first temperature setting value of the power semiconductor element chip set by the user is 80°C, the forward drop voltage value of the temperature detection diode corresponding to the setting temperature is a value read from the non-volatile memory of FIG 9, that is, VF = 1.769 (V).

Further, it can be seen that, when the second temperature setting value of the power semiconductor element chip set by the user is 140°C, the forward drop voltage value of the temperature detection diode corresponding to the setting temperature is also a value read from the non-volatile memory of FIG 9, that is VF = 1.538 (V).

The forward drop voltage value of the temperature detection diode has been described to the third decimal place. However, an embodiment is not limited to triple digits.

For example, when the first temperature setting value is 80°C, the MCU2 in the drive circuit 10 does not cut off the output of the power conversion device, and transmits the temperature value, and a symbol or a character that can identify the prior notice of warning temperature abnormality to the MCU1 in the control circuit, the MCU1 sends a command to perform display in the display unit to the digital operation panel 7, and the control circuit 5 outputs the output signal W-OH that indicates the temperature has reached the prior notice of warning temperature, at a point of time when the detection value of the forward drop voltage VF of the temperature detection diode becomes 1.769 (V) or more.

Further, when the second temperature setting value is 140°C, the MCU2 in the drive circuit 10 cuts off the output of the power conversion device and sends the temperature value, and a symbol or a character that can identify the warning temperature abnormality to the MCU1 in the control circuit, the MCU1 sends a command to perform display in the display unit to the digital operation panel 7, and the control circuit 5 outputs the output signal A-OH that indicates the temperature has reached the warning temperature, at a point of time when the detection value of the forward drop voltage VF of the temperature detection diode becomes 1.538 (V) or more.

Of course, it may be configured such that the MCU2 in the drive circuit 10 does not cut off the output of the power conversion device, and transmits the temperature value to the MCU1 in the control circuit, the MCU1 commands the digital operation panel 7 to display, in the display unit, the symbol or the character that can identify the prior notice of warning temperature abnormality corresponding to the temperature value, and the control circuit 5 outputs the output signal W-OH that indicates the temperature has reached the prior notice of warning temperature, at the point of time when the detection value of the forward drop voltage VF of the temperature detection diode becomes 1.769 (V) or more. The same applies to the processing of the warning temperature abnormality in the case of the second temperature setting value of 140°C.

That is, the share of the processing content between the MCU1 and the MCU2 is not limited, and can be freely determined according to a system configuration.

For example, the display content in the display unit may be W-OH (warning overheating) that means the prior notice of warning temperature abnormality. The display content is sufficient as long as the meaning of the display is in a distinguishable form by the user of the device, and display characters are not limited.

As described above, by display of a result on the digital operation panel 7, the temperature state of the power semiconductor element chip can be notified to the operator Therefore, the operator can clearly judge the state from the display content.

Of course, an operating limit temperature is defined for the power semiconductor element chip (for example, 150°C for a Si chip). Therefore, if a temperature setting range is limited so that the temperature of the operating limit temperature or more cannot be set from the digital operation panel 7, concern of heat breakage of the power semiconductor element chip is avoidable.

Information wanted by the user is at which temperature the power semiconductor element chip is operated, and is not the forward drop voltage VF value of the temperature detection diode. In this sense, one of the characteristics of the present invention is that the user can directly set the temperature of the power semiconductor element chip from the digital operation panel 7.

That is, avoidance of occurrence of a phenomenon that overheat protection is operated and the power conversion device is stopped, and a risk of sudden stop of the entire system is important, and this point is the one of the characteristics of the present invention.

### [Second Embodiment]

FIG 4 shows another embodiment of one arm configuration diagram inside an inverter.

FIG 4 its different from FIG 3 in that there is only a driving circuit 16 in a drive circuit 10, and a microcomputer MCU2 is not mounted.

The embodiment is configured to transmit a detection value of a forward drop voltage VF of a temperature detection diode to an A/D converter of a microcomputer MCU1 mounted in a control circuit 5 through a connector 11, to read forward drop voltage values VF of a temperature detection diode corresponding to a first temperature setting value and a second temperature setting value of a power semiconductor element chip set by a user from a digital operation panel 7, and to compare and manage the forward drop voltage values VF and the detection voltage transmitted to the A/D converter on a constant basis.

With such a configuration, similarly to the embodiment of FIG 3, when the first temperature setting value is 80°C, an output of a power conversion device is not cut off, the temperature value and a symbol or a character that can identify prior notice of warning temperature abnormality are displayed in a display unit, and an output signal W-OH that indicates the temperature has reached a prior notice of warning temperature can be output from the control circuit 5, at a point of time when the detection value of the forward drop voltage VF of the temperature detection diode becomes 1.769 (V) or more.

Further, when the second temperature setting value is 140°C, the output of the power conversion device is cut off, the temperature value, and a symbol or a character that can identify warning temperature abnormality are displayed in the display unit, and an output signal A-OH that indicates the temperature has reached a warning temperature can be output from the control circuit 5, at a point of time when the detection value of the forward drop voltage VF of the temperature detection diode becomes 1.538 (V) or more.

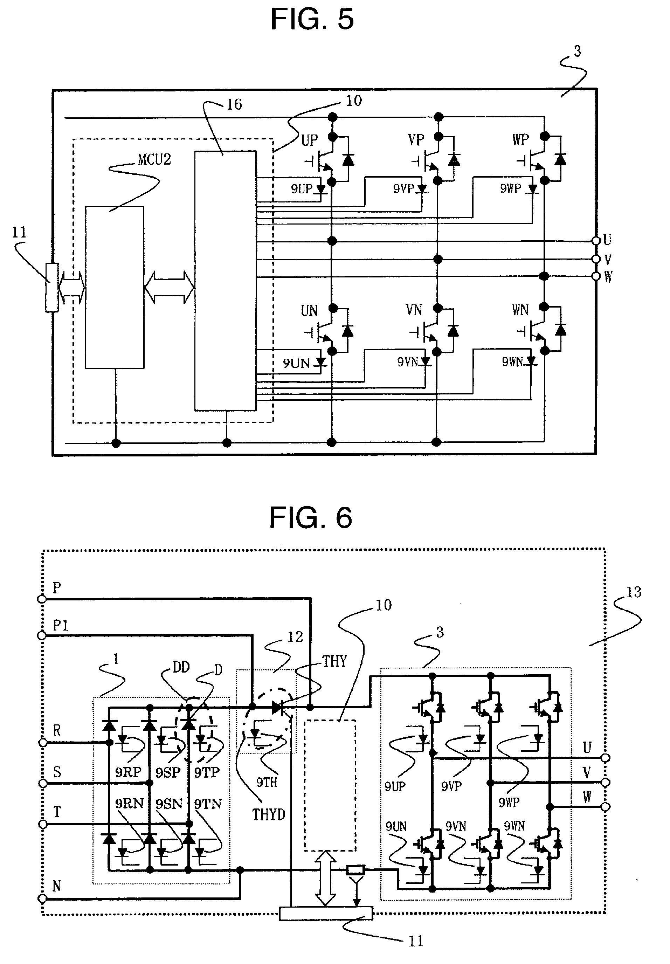

FIG. 5 shows an example of a detailed arm configuration diagram inside an inverter.

FIGS. 3 and 4 have shown one arm configuration diagrams inside an inverter. However, FIG 5 shows a configuration in which, about all arms UP, UN, VP, VN, WP, and WN of a case of three phases, a constant current is supplied from a driving circuit to respective temperature detection diodes 9UP, 9UN, 9VP, 9VN, 9WP, and 9WN, and forward drop voltages VF of temperature detection diodes of the all arms are transmitted to an A/D converter of a microcomputer MCU2.

### [Third Embodiment]

FIG 6 shows another embodiment related to an arm configuration diagram of a composite module.

In FIG 5, a power semiconductor switching element in which a temperature detection diode of an inverter unit 3 in a composite module 13 configured from a power semiconductor chip is mounted has been described in detail.

FIG 6 discloses all power semiconductor elements in which a temperature detection diode is mounted, about a converter unit 1, a rush suppression circuit 12, and an inverter unit 3 in a composite module 13 configured from a power semiconductor chip.

For example, as shown in FIG 13(b), it may be configured such that a temperature detection diode 9TP of a pn junction is formed on a silicon rectifier diode D chip that is one type of a power semiconductor element.

The configuration in which the temperature detection diode 9TP is formed on the rectifier diode D chip is a DD chip (semiconductor chip).

The embodiment is configured to supply a current from a constant current circuit (not shown) mounted in a drive circuit 10 to temperature detection diodes 9RP, 9RN, 9SP, 9SN, 9TP, 9TN, 9TH, 9UP, 9UN, 9VP, 9VN, 9WP, and 9WN formed on respective semiconductor element chips configured from 13 power semiconductor elements, to transmit detection voltage values VF of the diodes to an A/D converter of a microcomputer MCU2, similarly to FIG 5, and to calculate temperatures of the power semiconductor element chips corresponding to the values.

Of course, as described in FIG 4, only a driving circuit 16 is mounted in the drive circuit 10 and the microcomputer is not necessarily mounted in the drive circuit 10, and there is no problem that the detection values of the forward drop voltages VF of the temperature detection diodes are transmitted to an A/D converter of a microcomputer MCU1 mounted on a control circuit 5 through a connector 11, forward drop voltage values VF of the temperature detection diodes corresponding to a first temperature setting value and a second temperature setting value of a rectifier diode D chip or a thyristor THY chip that is one type of a power semiconductor element set by the user from a digital operation panel 7 are read from non-volatile memory, and the forward drop voltage values VF and the detection voltages transmitted to the A/D converter are compared and managed in a constant basis.

### [Fourth Embodiment]

FIG 7 shows another embodiment of arm configuration diagrams of a converter unit and an inverter unit.

FIG 7 shows a configuration in which a converter unit 1, and a rush suppression circuit 12 and an inverter unit 3, which configure a power semiconductor 13 in FIG 6, are separated.

FIG 7 shows an example in which a power semiconductor module 21 that configures the converter unit 1, and a power semiconductor module 20 that configures the rush suppression circuit 12 and the inverter unit 3 are separated, and an example configured from temperature detection diodes 9RP, 9RN, 9SP, 9SN, 9TP, and 9TN formed on chips of respective power semiconductors inside the power semiconductor module 21, and temperature detection diodes 9TH, 9UP, 9UN, 9VP, 9VN, 9WP, and 9WN formed on chips of respective power semiconductors inside the power semiconductor module 20.

The embodiment is configured to supply a current from a constant current circuit (not shown) mounted in a drive circuit 19 to the temperature detection diodes 9RP, 9RN, 9SP, 9SN, 9TP, and 9TN formed on the chips of the semiconductors in the power semiconductor module 21, to transmit detection voltage values VF of the temperature detection diodes to an A/D converter of a microcomputer, similarly to FIG 5, and to calculate temperatures of the power semiconductor element chips corresponding to the detection voltage values.

Further, it is configured to supply a current from the constant current circuit (not shown) mounted in the drive circuit 19 to the temperature detection diodes 9TH, 9UP, 9UN, 9VP, 9VN, 9WP, and 9WN formed on the chips of the semiconductors in the power semiconductor module 20, to transmit detection voltage values VF of the diodes to the A/D converter of the microcomputer, similarly to FIG 5, and to calculate temperature of the power semiconductor element chips corresponding to the values.

Of course, as described in FIG 4, only the driving circuits are included in the drive circuits 10 and 19, and the microcomputer is not necessarily mounted in the drive circuits 10 and 19, and there is no problem that the detection values of the forward drop voltages VF of the temperature detection diodes are transmitted to an A/D converter of a microcomputer MCU1 mounted on a control circuit 5 through a connector 11, forward drop voltage values VF of the temperature detection diodes corresponding to a first temperature setting value and a second temperature setting value of a power semiconductor chip set by the user from a digital operation panel 7 are read from non-volatile memory, and the forward drop voltage values VF and the detection voltages transmitted to the A/D converter are compared and managed in a constant basis.

Further, the first to third embodiments disclose that the first and second temperature setting values of the temperature detection diode can be individually set. However, it is not necessary to limit the number of the temperature setting values to two. A similar effect can be exhibited with a configuration in which values of n temperatures can be set.

That is, by releasing the temperature setting value to the user, whether the temperature has reached the setting temperature can be fed back to the user, and the user can appropriately judge the state of the power conversion device and conduct the next action without having an operation of overheat protection and sudden stop of the power conversion device.

### [Fifth Embodiment]

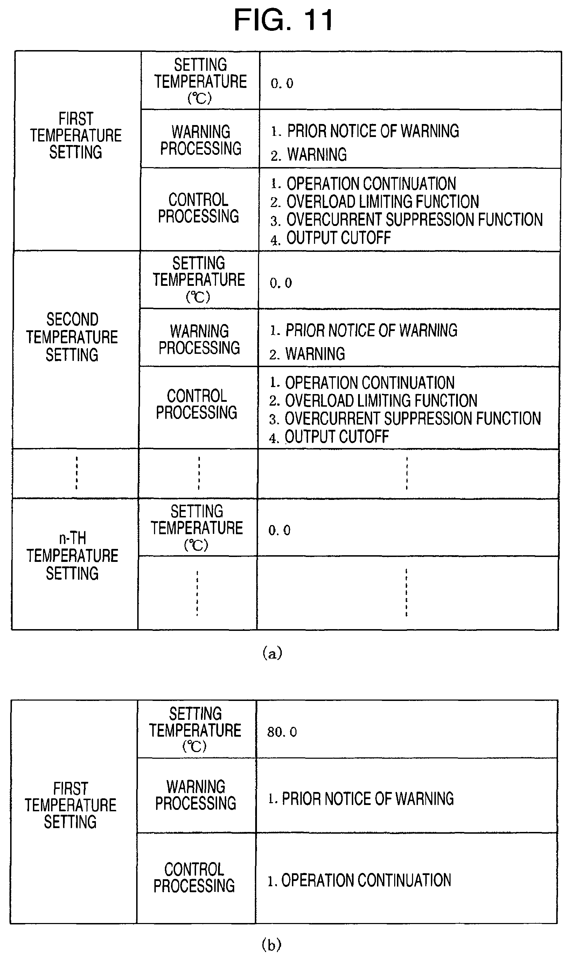

FIG 11 shows lists of temperature setting functions displayed on a digital operation panel according to the present invention.

Whether the temperature of a semiconductor chip in a power semiconductor module 13 mounted in a power conversion device has reached a setting temperature can be fed back to the user, by inputting numerical values for the setting temperature, the warning processing, and the control processing that are items from the first temperature setting section to the n-th temperature setting section shown in FIG 11 (a), or by selecting an item from items set in advance, using a digital operation panel 7. Further, since a control processing method of the power conversion device can be selected from the items set in advance when the temperature has reached the setting temperature, the power conversion device can be optimally controlled without carelessly stopping the power conversion device.

In the present embodiment, the control method of the power conversion device can be selected from the items set in advance without having operation of overheat protection and sudden stop of the power conversion device. Therefore, there is no concern for the user to carelessly stop the power conversion device to cause system failure.

For example, it may be configured to select a setting value and handling of a warning signal (select a warning signal or a prior notice of warning signal) in first to n-th temperature setting values, a method of controlling the power conversion device (whether automatic operation continuation, an operation of an automatic overload limiting function, or output cutoff), and the line in advance. As setting examples in this case, when the first temperature setting value is set to 80°C, the second temperature setting value is set to 100°C, the third temperature setting value is set to 120°C, and the fourth temperature setting value is set to 140°C from the digital operation panel 7, the prior notice of warning signal is notified to the user when the temperature has reached the first temperature setting value, further, the prior notice of warning signal is output and the overload limiting function is operated, and an overcurrent of a switching element is suppressed when the temperature has reached the second temperature setting value, further, the prior notice of warning signal is output when the temperature has reached the third temperature setting value. At this time, the user side takes a step to decrease a load and the like to suppress the current flowing in the switching element and to decrease a loss of the switching element, so that the user can avoid occurrence of a phenomenon that overheat protection is operated and the power conversion device is suddenly stopped, and a situation in which the entire system is stopped.

As described above, by allowing the user side to arbitrarily set a detection temperature of a power semiconductor, when the temperature has reached a setting temperature, a time to remove the cause, to change a control operation of the power conversion device, or to decrease a load can be provided. Therefore, there is a great effect to eliminate a concern to carelessly stop a facility from a preventive maintenance perspective of the user side, and this point is a characteristic of the present invention.

1. Prior notice of warning and 2. Warning selected in the warning processing, and 1. Operation continuation, 2. Overload limiting function, 3. Overcurrent suppression function, and 4. Output cutoff selected in the control processing are examples, and items are not limited to these examples.

Further, FIG 11(b) shows an example in which input numerical values of the items or the items in the first temperature setting section are set.

FIG 11(b) is an example of when 80.0 is input to the setting temperature, 2. Prior notice of warning is selected as the warning processing, and 1. Operation continuation is selected as the control processing. Operations as the power conversion device of this case is to output the prior notice of warning at a point of time when the temperature of a power semiconductor chip in a power semiconductor module becomes 80.0°C that is the setting temperature or more, and to perform operation continuation selected as the control processing, that is, the power conversion device outputs the warning, but does not cut off an output of the power conversion device, and a motor is continuously driven.

Therefore, by releasing the temperature setting value to the user, whether the temperature has reached the setting temperature can be fed back to the user, and the user can appropriately judge the state of the power conversion device and conduct the next action without having an operation of overheat protection and sudden stop of the power conversion device.

It is the fourth temperature setting value that finally protects the switching element or another power semiconductor element from abnormal overheating, and it is configured to cut off the power conversion device itself when the temperature has reached the fourth temperature setting value.

### [Sixth Embodiment]

FIG 12 is a diagram of power conversion devices according to the present invention stored in a self-support board. A large number of power conversion devices 17 (twelve, for example) in a self-support board 21. In the embodiment, heat generation due to a loss of the large number of power conversion devices and peripheral devices (not shown) installed in the board is filled in the self-support board. Even in a case where a load of a motor driven by the power conversion devices is small (the heat generation is small), overheat protection by a temperature detector of a power semiconductor is operated, and the power conversion device may suddenly stopped, when an outdoor temperature is high such as in summer.

The power conversion devices arranged on an upper portion of the board is subject to an influence of waste heat of other power conversion devices arranged on a lower portion. Therefore, the power conversion devices arranged on an upper portion of the board have a higher ambient temperature.

A cause of sudden stop of the power conversion device due to temperature abnormality is insufficient ventilation in the board.

Since the large number of power conversion devices and the peripheral devices installed in the board generate heat, an air fan is used for ventilation of the board, and a suction air port with an air filter is provided in a board surface in order to suck the air into the board.

To prevent suction of dust and cotton dust floating in the air into the board, a fine mesh air filter is used. However, the dust and cotton dust clog the air filter, and hinder the suction of the air into the board. As a result, the heat is filled in the board, and the temperature in the board is abnormally increased. Even in a case where the load of the power conversion devices is small (the heat generation is small), the temperature exceeds a product ambient temperature specification of the power conversion devices installed in the board.

That is, in an installation environment containing a lot of dust and cotton dust, not a decrease in rotation speed (decrease in flow rate) of the air fan due to expiration of life, the dust and cotton dust clog the suction air port 22 of the air filter that sucks the air into the board, and the heat in the board cannot be sufficiently discharged. When the heat is filled in the self-support board, the temperature in the board is increased despite a low load of the power conversion devices, the ambient temperature of the power conversion devices is increased, and overheat protection by temperature detectors of power semiconductors mounted in the power conversion devices are operated and sudden stop of the power conversion devices occurs.

The user obtains an occurrence loss from an operation condition of the facility and a load factor of the large number of power conversion devices in advance, designs the flow rate and the number of air fans, and the size (dimension) of the suction air port with an air filter, for discharging the heat in the board, and determines the dimension of the board. Therefore, the user does not expect the operation of overheat protection of the power conversion devices. Nonetheless, when the overheat protection of the power conversion devices is operated and the power conversion devices are suddenly stopped, it takes time to identify what is the cause because it is an unexpected problem, which becomes a major obstacle of inactive time of the facility.

Therefore, by storing the power conversion devices 17 that includes the lists of temperature setting functions shown in FIG 11 by standard, the operator can monitor the temperature at a remote operation board side from a control terminal block 25 as an overheat abnormal signal of temperature abnormality, by using the temperature setting functions provided in the power conversion device, without installing a special temperature detector that monitors the temperature in the self-support board. The operator can get to know an abnormal increase in internal temperature in the self-support board, with the prior notice of warning temperature signal W-OH (a state of not cutting off the output of the power conversion device) displayed on the remote control board.

The operator immediately confirms whether the cause of the temperature abnormality is the decrease in the rotation speed (the decrease in the flow rate) due to the expiration of life of the air fan, or the clogging of the air filter, in view of information of the temperature abnormality and the load factor of the power conversion devices, and thus the time to remove the cause is provided. Therefore, there is a great effect to eliminate a concern to carelessly stop the facility from a preventive maintenance perspective of the user side.

The user can perform detection temperature setting and can select warning processing and control processing, using the functions provided in the power conversion device. This is one of the characteristics of the present invention.

That is, detection of overheating by the temperature detector of a main element in the power conversion device (inverter) due to stagnation of the heat in the self-support board, and sudden stop of the power conversion device due to the overheat protection can be prevented in advance. Therefore, the preventive maintenance becomes possible, and the inactive time of the facility can be drastically decreased.

Further, OH-AMB (which means the cause of overheating: high ambient temperature) may be displayed on the digital operation panel 7 as display of the prior notice of warning temperature.

The display content is sufficient as long as the meaning of the display is in a distinguishable form by the user of the device, and display characters are not limited.

By displaying the result on the digital operation panel 7 as described above, the operator can be notified the temperature state of the power semiconductor element chip, and thus can appropriately judge the state from the display content.

Further, the power conversion device is continuously operated when the temperature of a semiconductor chip in a power semiconductor module 21 mounted in the power conversion device has reached second temperature setting, by inputting numerical values for the setting temperature, the warning processing, and the control processing that are items from a temperature setting section, or by selecting an item from items set in advance. Therefore, the operator can select whether an automatic overload limiting function is operated or an automatic overcurrent suppression function is operated, which is a control function executed by the power conversion device, and cannot carelessly stop the power conversion device.

According to the present invention, whether the temperature of the semiconductor chip in the power semiconductor module 21 mounted in the power conversion device has reached the setting temperature can be fed back to the user, by inputting numerical values for the setting temperature, the warning processing, and the control processing that are items from the first temperature setting section to the n-th temperature setting section shown in FIG 11 (a), or by selecting an item from items set in advance, using a digital operation panel 7. Therefore, it is not necessary to install a special temperature detector for detecting the temperature in the self-support board, and the operator can monitor an alarm warning signal of temperature abnormality at the remote operation side from the control terminal block 25, and can get to know an abnormal increase in internal temperature in the self-support board, with the warning signal displayed on the remote control board.

Therefore, there are effects to prevent, in advance, detection of temperature abnormality by the temperature detector of a main element in the power conversion device (inverter) due to stagnation of the heat in the self-support board, and sudden stop of the power conversion device due to the overheat protection, to decrease maintenance time, and further, to drastically decrease the inactive time of the facility.

As described above, one of the characteristics of the present invention is expressed as follows.

That is, when the first temperature setting value and the second temperature setting value are individually set and the first temperature setting value is set as the prior notice of warning temperature, and the temperature has reached the prior notice of warning temperature, for example, it is configured not to cut off the output of the power conversion device, and to output, to a higher order, a signal indicating the fact that the temperature has reached the prior notice of warning temperature.

Then, it is configured to set the second temperature setting value as the warning temperature, and to cut off the output of the power conversion device when the temperature has reached the warning temperature, so that the power semiconductor element is used at the operating limit temperature or less and effective use of the power conversion device is enhanced. Further, a concern to carelessly stop a facility can be eliminated from a convenience perspective of the user side, that is, a preventive maintenance perspective.

The first and second temperature setting values of the temperature detection diode can be individually set, and it is configured to set the first temperature setting value as the prior notice of warning temperature and not to cut off the output of the power conversion device when the temperature has reached the prior notice of warning temperature, and to set the second temperature setting value as the warning temperature and to cut off the output of the power conversion device when the temperature has reached the warning temperature, whereby the power semiconductor element is used at the operating limit temperature or less, and a power conversion device that can enhance effective use of a power semiconductor and can improve convenience of the user is provided.

That is, by releasing the temperature setting value to the user, whether the temperature has reached the setting temperature can be fed back to the user, and the user can appropriately judge the state of the power conversion device and conduct the next action without having an operation of overheat protection and sudden stop of the power conversion device.

Further, a method of controlling the power conversion device can be selected when the temperature has reached the setting temperature. Therefore, there is an effect to optimally control the power conversion device without carelessly stopping the power conversion device.

### REFERENCE SIGNS LIST

1 Converter
2 Smoothing electrolytic capacitor
3 Inverter
4 Alternating current motor
5 Control circuit
6 Cooling fan
7 Digital operation panel
8 Power source circuit
VPN Direct current voltage
10 Drive circuit
11 Connector
12 Rush suppression circuit
13, 20, and 21 Power semiconductor
14 Cooling fin
15 Mold resin case
16 Driving circuit
17 Power conversion device
18UP and 18UN Constant current circuit
19 Temperature detection circuit
20 Air fan
21 Self-support board
22 Suction air port with air filter
23 Exhaust of air
24 Intake of air
25 Control terminal block
MCU1 and MCU2 Microcomputer
RB Current limiting resistance
A Inclination of straight line
B Intercept of straight line
* Multiplication operator
W-OH Output signal indicating temperature has reached prior notice of warning temperature
A-OH Output signal indicating temperature has reached warning temperature
UP, UN, VP, VN, WP, and WN Main switching element
9, 9UP, 9VP, 9WP, 9UN, 9VN, 9WN, 9RP, 9SP, 9TP, 9RN, 9SN, 9TN, and 9TH Temperature detection diode
VF-UP Forward drop voltage of temperature detection diode of U-phase upper arm UP chip
VF-UN Forward drop voltage of temperature detection diode of U-phase lower arm UN chip
MCU1 and MCU2 Microcomputer
RB Current limiting resistance
A Inclination of straight line
B Intercept of straight line
* Multiplication operator
W-OH Output signal indicating temperature has reached prior notice of warning temperature
A-OH Output signal indicating temperature has reached warning temperature

## Claims

1. A power conversion device comprising:
a converter configured to rectify and convert an alternating current voltage of an alternating current power source into a direct current voltage;
a direct current intermediate circuit including a smoothing capacitor configured to smooth the direct current voltage converted in the converter;
an inverter configured to convert the direct current voltage converted in the converter into an alternating current voltage, and including a semiconductor chip in which a temperature detection diode is formed in a power semiconductor element; and
an operation unit configured to be able to set a plurality of setting temperatures.

2. The power conversion device according to claim 1, wherein
the operation unit is able to set a first temperature that is a prior notice of warning temperature and a second temperature that is a warning temperature.

3. The power conversion device according to claim 2, wherein
the operation unit is able to set the first temperature and processing content of when the first temperature is calculated, and the second temperature and processing content of when the second temperature is calculated.

4. The power conversion device according to claim 1, comprising:
a microcomputer configured to calculate a temperature of the semiconductor chip based on a detection voltage of the diode.

5. The power conversion device according to claim 4, wherein
the detection voltage of the diode is obtained by supplying a constant current to the diode, and detecting change of a forward drop voltage due to temperature change.

6. The power conversion device according to claim 4, wherein
the temperature of the semiconductor chip is calculated based on a relationship between a voltage of the diode and the temperature of the semiconductor chip.

7. The power conversion device according to claim 1, wherein
the semiconductor chip, the diode, and the microcomputer are packaged in one package.

8. The power conversion device according to claim 6, wherein
the relationship between a voltage of the diode and the temperature of the semiconductor chip is a correlation equation of a forward drop voltage of the diode and the temperature.

9. The power conversion device according to claim 6, wherein
the relationship between a voltage of the diode and the temperature of the semiconductor chip is non-volatile memory in which correlation data of a forward drop voltage of the diode and the temperature determined in advance.

10. The power conversion device according to claim 2, wherein
an output of the power conversion device is not cut off when a temperature becomes the prior notice of warning temperature.

11. The power conversion device according to claim 2, wherein
an output of the power conversion device is cut off when a temperature becomes the warning temperature.

12. The power conversion device according to claim 1, wherein
the plurality of setting temperatures is individually settable.

13. The power conversion device according to claim 4, wherein
the operation unit displays the temperature of the semiconductor chip calculated in the microcomputer.

14. The power conversion device according to claim 2, wherein
the operation unit displays the prior notice of warning temperature when a temperature becomes the prior notice of warning temperature.

15. The power conversion device according to claim 2, wherein
the operation unit displays the warning temperature when a temperature becomes the warning temperature.

16. The power conversion device according to claim 2, wherein
the operation unit displays a signal when a temperature becomes the prior notice of warning temperature or the warning temperature.
